# FASCICULE DE BREVET EUROPEEN

(11) **EP 2 192 000 B1**
(45) Date de publication et mention de la délivrance du brevet: **01.02.2012**
(21) Numéro de dépôt: 09176810.1
(22) Date de dépôt: 23.11.2009
(51) Int. Cl.: B60N 2/28

(54) **Siège auto pour enfant, à moyens de dérivation temporaire de la sangle de ceinture de sécurité.**
Autokindersitz mit Mitteln zur vorübergehenden Umleitung des Sicherheitsgurts
Child's car seat with means for temporarily bypassing the seatbelt strap.

(30) Priorité: 28.11.2008 FR 0858147
(43) Date de publication de la demande: 02.06.2010
(73) Titulaire: Dorel France SA, 49309 Cholet Cedex (FR)
(72) Inventeur: Biaud, Richard, 49340, TREMENTINES (FR)
(74) Mandataire: Bioret, Ludovic

(56) Documents cités:
- EP-A- 0 747 257
- EP-B1- 0 823 349
- WO-A-90/11203
- FR-A- 2 586 383
- US-A- 4 789 179

## Description

### 1. Domaine de l'invention

Le domaine de l'invention est celui de la puériculture.

Plus précisément, l'invention concerne les sièges auto pour enfant, destinés à être installés sur un siège d'un véhicule automobile, et à être maintenus par les sangles d'une ceinture de sécurité de ce dernier.

L'invention peut s'appliquer à différents types de sièges autos, adaptés à l'âge et au poids des enfants (et notamment aux sièges des groupes 0, 1, 2 et 3 et leurs combinaisons).

On utilisera par la suite le terme « coque » ou le terme « siège auto » pour désigner un siège pour enfant selon l'invention, destiné à assurer la sécurité d'un enfant dans un véhicule.

### 2. Solutions de l'art antérieur

On connaît de très nombreux types de siège auto. Selon une technique classique, les sièges auto peuvent être maintenus sur un siège ou une banquette d'un véhicule automobile à l'aide de la sangle de la ceinture de sécurité de ce dernier.

Deux modes d'installation du siège auto sont possibles, à savoir un premier mode dans lequel le siège auto est installé face à la route et un deuxième mode dans lequel le siège auto est installé dos à la route.

Dans certains cas, et notamment lorsque le siège auto est installé dos à la route, la sangle de la ceinture de sécurité peut circuler sur ou au-dessus d'une partie supérieure du siège auto, pour maintenir le siège auto sur le siège ou la banquette du véhicule.

### 3. Inconvénients de l'art antérieur

L'un des inconvénients majeurs de ce mode de guidage de la sangle est qu'elle peut gêner l'installation de l'enfant dans le siège auto, et de la même manière le retrait de l'enfant ou son réajustement dans le siège auto.

Un exemple d'un siége automobile selon le préambule de la revendication est divulgué dans le document EP0823349b1.

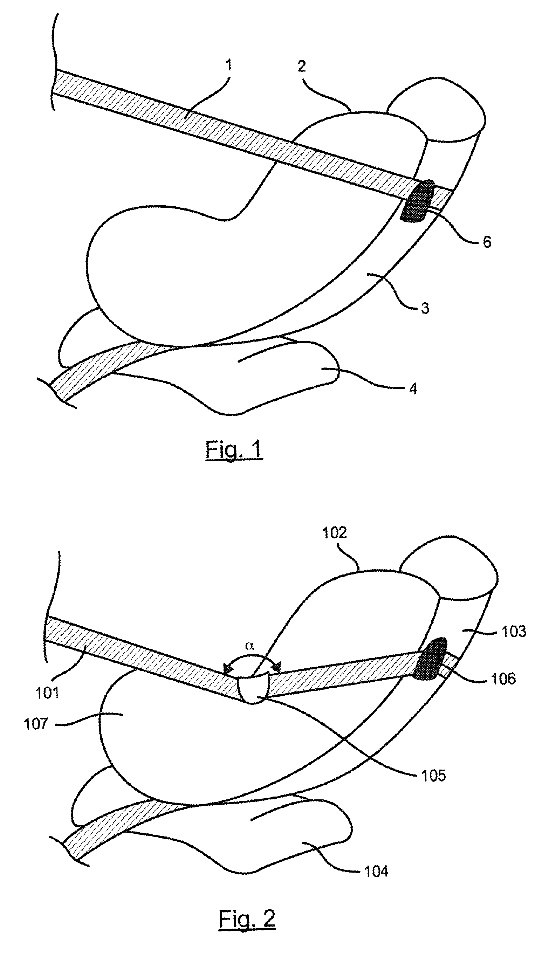

La figure 1 illustre schématiquement cette situation, sur une coque 2 en matière plastique qui est installée dos à la route sur la banquette ou le siège 4 d'un véhicule. Cette coque 2 comprend un dossier 3 et une assise (non visible). Des moyens de réception et de guidage 6 (un étrier par exemple) d'une sangle 1 de ceinture de sécurité classique (à plusieurs points d'ancrage) sont agencés sur la partie supérieure du dossier 3 pour maintenir la coque 2 solidaire du véhicule.

Il apparaît de manière évidente sur la figure 1 que la partie pectorale de la sangle 1 fait obstacle à un utilisateur qui souhaiterait installer un enfant dans la coque 2 (ou alternativement qui souhaiterait retirer l'enfant du siège auto ou réajuster la position de l'enfant dans le siège auto). Dans certains cas, l'utilisateur préfèrera déverrouiller la ceinture de sécurité avant d'installer l'enfant dans la coque 2, mais ceci n'est pas souhaitable, tant en termes de sécurité que d'ergonomie.

Par ailleurs, un autre trajet n'est pas souhaitable pour la sangle. En effet, cette mise en oeuvre permet d'obtenir la meilleure sécurité, en cas de choc ou de mouvement brusque du véhicule.

### 4. Objectifs de l'invention

L'invention a notamment pour objectif de pallier ces inconvénients de l'art antérieur.

Plus précisément, un objectif de l'invention est de rendre aisés l'installation et le retrait d'un enfant dans un siège auto, sans nuire à la sécurité de l'enfant.

L'invention a également pour objectif d'assurer un maintien correct du siège auto sur le siège ou la banquette d'un véhicule, lorsque celui-ci se déplace.

### 5. Résumé de l'invention

L'invention propose une solution nouvelle selon les revendications 1 à 9 qui ne présente pas l'ensemble de ces inconvénients de l'art antérieur, sous la forme d'un siège auto pour enfant, comprenant des moyens de réception et de guidage d'une sangle de ceinture de sécurité d'un véhicule automobile.

Ainsi, l'invention permet de faciliter l'installation d'un enfant dans un siège auto qui est maintenu sur le siège d'un véhicule automobile par la sangle d'une ceinture de sécurité. Pour ce faire, le trajet de la sangle par rapport au siège auto est modifié, de manière à écarter temporairement la sangle de la coque pendant l'installation ou le retrait de l'enfant. Ainsi, la sangle écartée suit par exemple sensiblement la forme de la coque. En d'autres termes, le trajet suivi par la sangle entre l'enrouleur de sangle et le dossier de la coque n'est pas un segment de droite, mais définit au contraire un angle. De cette façon, l'installation d'un enfant dans la coque est facilitée.

La position de libération permet un retour rapide et simple dans l'état de voyage, c'est-à-dire de maintien efficace du siège auto par la sangle sur le siège ou la banquette, lorsque l'enfant est installé et attaché.

Selon un aspect avantageux de l'invention, lorsque ladite sangle est libérée desdits moyens de dérivation, elle prend, automatiquement, une position de maintien de ladite coque, en coopérant avec lesdits moyens de réception et de guidage de la sangle sur la coque.

On assure ainsi, sans manipulation, un maintien correct et sûr de la coque lorsque la sangle est libérée des moyens de dérivation.

De façon avantageuse, les moyens de dérivation sont mobiles en rotation entre la position de dérivation et la position de libération.

Ainsi, les moyens de dérivation peuvent passer de la position de dérivation à la position de libération (ou inversement) par rotation.

La position de dérivation et la position de libération sont par exemple séparées par un angle de l'ordre de 180°.

Ceci permet à l'utilisateur de différencier de manière aisée la position de dérivation de la position de libération de la sangle.

Selon un mode de réalisation préférentiel, les moyens de dérivation coopèrent avec des moyens de commande d'un retour dans la position de libération.

De façon avantageuse, ces moyens de commande comprennent des moyens de temporisation.

Ceci permet de maintenir la sangle dans la position de dérivation pendant un laps de temps prédéterminé, le temps par exemple que l'utilisateur installe l'enfant dans la coque. À la fin de ce laps de temps prédéterminé, la sangle est libérée, et reprend sa position de voyage.

Avantageusement, les moyens de temporisation sont armés par le passage de la position de libération à la position de dérivation.

Les moyens de temporisation sont ainsi mis en oeuvre automatiquement en réponse au passage des moyens de dérivation de la position de libération à la position de dérivation.

Selon des modes de réalisation particuliers de l'invention, ces moyens de temporisation comprennent un dispositif à ressort spiral ou un dispositif à roue à rochet et cliquet.

Selon un autre aspect de l'invention, les moyens de commande peuvent comprendre des moyens de détection d'un verrouillage correct du harnais de l'enfant.

Ainsi, les moyens de commande d'un retour des moyens de dérivation dans la position de libération coopèrent avec des moyens de détection d'un verrouillage correct du harnais de l'enfant. Ceci permet de libérer la sangle de la position de dérivation dès que (ou éventuellement après un petit laps de temps) l'enfant est installé dans la coque et que le harnais de la coque est verrouillé.

### 6. Liste des figures

D'autres caractéristiques et avantages de invention apparaîtront plus clairement à la lecture de la description suivante d'un mode de réalisation préférentiel, donné à titre de simple exemple illustratif et non limitatif, et des dessins annexés parmi lesquels :
- la figure 1 présente une vue de côté schématique d'une coque, maintenue sur un siège d'un véhicule automobile à l'aide de la sangle de la ceinture de sécurité du véhicule, dans une position classique ;
- la figure 2 présente une vue de côté schématique de la coque pour enfant de la figure 1, mettant en oeuvre l'invention ;
- les figures 3A à 3C sont des vues des moyens de dérivation de sangle selon un premier mode de réalisation; et
- les figures 4A à 4D sont des vues des moyens de dérivation de sangle selon un deuxième mode de réalisation.

### 7. Description détaillée de l'invention

Le principe de l'invention repose donc sur l'utilisation de moyens de dérivation, ou de déport, sur un siège auto, et notamment une coque, selon le mode de réalisation décrit ci-après. Ces moyens de dérivation permettent d'écarter temporairement la sangle de la ceinture de sécurité d'un véhicule lorsqu'un utilisateur souhaite installer un enfant dans la coque, ou le retirer de celle-ci. Les moyens de dérivation peuvent avantageusement libérer automatiquement la sangle au bout d'un laps de temps prédéterminé, et/ou lorsqu'il est détecté que le harnais de maintien de l'enfant dans la coque est verrouillé.

L'invention peut donc être mise en oeuvre sur une coque telle que celle illustrée en figure 1.

Une coque 102 de ce type, mettant en oeuvre un mode de réalisation particulier de l'invention, est illustrée schématiquement, vue de côté, sur la figure 2. La coque 102 comprend donc classiquement une coque comprenant un dossier 103 et une assise (non visible), un harnais de maintien comprenant par exemple deux boucles d'épaule et une sangle d'assise, un ensemble de verrouillage dudit harnais (non représentés).

La coque 102 repose sur la banquette ou le siège 104 d'un véhicule, et coopère avec la ceinture de sécurité, et notamment la sangle pectorale 101 (que l'on appellera « sangle » par la suite), pour maintenir la coque 102 solidaire du véhicule.

Selon l'invention, la coque 102 comprend des moyens de dérivation 105, permettant d'écarter la sangle 101 pendant l'installation d'un enfant dans la coque 102. Dans le mode de réalisation de la figure 2, les moyens de dérivation 105 sont adaptés pour être fixés sur une partie latérale 107 de la coque 102 et maintiennent la sangle 101 dans une position dérivée.

Ainsi, les moyens de dérivation 105 de la sangle 101 permettent de modifier le trajet de la sangle 101 autour de la coque 102 et d'éviter que la sangle 101 ne fasse obstacle à un utilisateur qui souhaiterait installer un enfant dans la coque 102.

Lorsque la sangle 101 est maintenue dans une position dérivée telle que représentée sur la figure 2, la sangle 101 forme un angle α, au voisinage des moyens de dérivation 105, alors que, selon l'art antérieur (figure 1) la sangle 1 s'étend en ligne droite. L'angle α est en pratique généralement plus ouvert qu'un angle droit, par exemple 100 à 160°.

Lorsque la sangle 101 n'est plus maintenue dans la position dérivée par les moyens de dérivation, elle passe dans une position de libération qui correspond à la position de la sangle 1 dans la figure 1.

Des moyens de réception et de guidage 106 sont situés sur la partie arrière du dossier 103, sur la coque, et permettent le guidage de la sangle 101 (dans la position de libération) de manière à maintenir de façon correcte la coque 102 sur le siège ou la banquette 104 du véhicule afin que la coque 102 soit moins sensible aux débattements latéraux et transversaux.

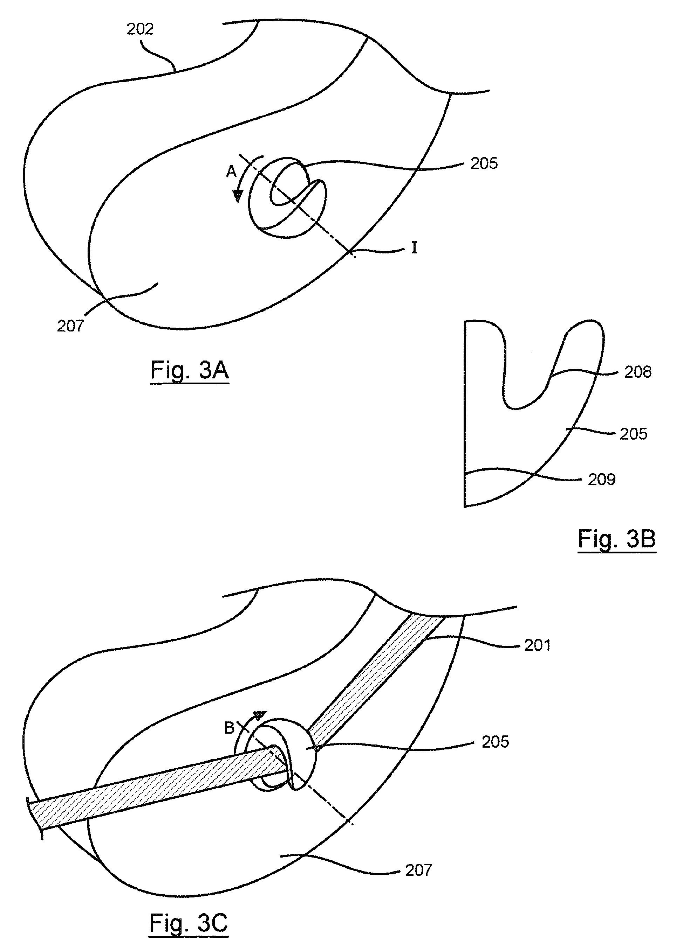

Les figures 3A à 3C montrent plus clairement les moyens de dérivation de la sangle selon un premier mode de réalisation. Dans ce mode de réalisation, les moyens de dérivation 205 sont mobiles en rotation selon un axe I perpendiculaire à la partie latérale 207 de la coque 202.

La figure 3A montre les moyens de dérivation 205 dans la position de libération (qui correspond à la position de la sangle 1 dans la figure 1) dans laquelle la sangle (non représentée) n'est pas écartée.

La figure 3B est une vue de côté qui montre plus en détail la forme des moyens de dérivation 205. Cette forme peut être apparentée à un crochet en forme de « U ». Ainsi, les moyens de dérivation 205 comprennent une base 209 dont la surface est sensiblement plane et qui est disposée en regard la partie latérale 207 de la coque 202 et une gorge 208 de guidage et de maintien de la sangle 201. Dans la position de libération des figures 3A et 3B, la gorge 208 est orientée vers le haut.

Pour faire passer les moyens de dérivation 205 de la position de libération (figure 3A) à la position de dérivation (figure 3C), l'utilisateur manipule les moyens de dérivation 205 de manière à les faire tourner d'un angle de l'ordre de 180° selon la direction A (figure 1). Dans la position de dérivation illustrée figure 3C, la gorge 208 est orientée vers le bas. L'utilisateur peut alors insérer la sangle 201 dans la gorge 208 ce qui empêche tout mouvement de la sangle 201 vers le haut et maintient donc la sangle 201 écartée, de manière à faciliter l'installation d'un enfant dans la coque 202. Une fois l'enfant installé, la sangle 201 est libérée de la gorge 208 par basculement les moyens de dérivation 205 dans la direction B jusqu'à atteindre la position de libération de la figure 3A.

Ce basculement peut être commandé par l'utilisateur. On comprend cependant que, par sécurité, il est avantageux de rendre ce basculement automatique, pour que la sangle ne reste pas déviée, suite à un oubli ou une négligence, pendant que le véhicule est en mouvement.

Les moyens de dérivation 205 peuvent donc avantageusement coopérer avec des moyens de commande (non représentés) qui commandent le retour automatique des moyens de dérivation 205 de la position de dérivation (figure 3C) à la position de libération (figure 3A).

Ces moyens de commande peuvent comprendre des moyens de temporisation qui permettent de maintenir la sangle 201 écartée pendant un laps de temps prédéterminé, correspondant à une estimation du temps nécessaire pour que l'utilisateur installe l'enfant dans la coque 202. À la fin de ce laps de temps, la sangle 201 est libérée. Ces moyens de temporisation peuvent être mécaniques et sont préférablement intégrés dans l'élément de dérivation lui-même.

Ces moyens de temporisation comprennent par exemple un ressort spiral qui peut entraîner en rotation une roue réductrice, qui elle-même peut entraîner en rotation une pièce excentrée. La pièce excentrée coopère avec une gâche, associée à un ressort, qui peut bloquer les moyens de dérivation 205. Lorsque les moyens de dérivation 205 passent de la position de libération à la position de dérivation, le ressort spiral est tendu et la pièce excentrée pivote ce qui permet de pousser la gâche vers les moyens de dérivation 205 et de les bloquer en position de dérivation.

À mesure que le ressort spiral se détend, la roue réductrice tourne et entraîne la pièce excentrée en rotation. La forme de la pièce excentrée est choisie de manière à ce que lorsque le ressort spiral est détendu, la gâche sous l'effet du ressort associé est ramenée vers la pièce excentrée et débloque les moyens de dérivation 205. Les moyens de dérivation 205 retournent alors automatiquement dans la position de libération de la sangle. La durée de temporisation peut être réglée par l'utilisateur au moyen d'un bouton de réglage par exemple qui peut modifier la tension du ressort spiral.

Une autre solution pour mettre en oeuvre la temporisation repose sur l'utilisation d'un dispositif mettant en oeuvre une roue à rochet et un cliquet qui peut activer une gâche de blocage des moyens de dérivation 205 et qui peut, après un laps de temps prédéterminé, désengager la gâche des moyens de dérivation 205.

Avantageusement, des moyens sonores signalent que le laps de temps est presque écoulé, permettant à l'utilisateur, si nécessaire, d'agir sur les moyens de dérivation pour rallonger le temps nécessaire.

Alternativement ou en combinaison, les moyens de commande peuvent comprendre des moyens de détection d'un verrouillage correct du harnais de l'enfant. Ainsi, lorsque l'enfant est installé dans la coque 202 et que le harnais est correctement verrouillé, les moyens de commande commandent le retour automatique des moyens de dérivation 205 de la position de dérivation (figure 3C) à la position de libération (figure 3A).

Ceci permet de libérer la sangle 201 de la position écartée lorsque l'enfant est installé dans la coque et lorsque le harnais de la coque est verrouillé. Dans ce cas, les moyens de commande peuvent être du type électromécanique et comprennent par exemple un circuit d'alimentation d'un électro-aimant coopérant avec une gâche de blocage des moyens de dérivation 205 dans la position de dérivation. Le verrouillage du harnais peut engendrer la fermeture d'un contact électrique du circuit d'alimentation. L'électro-aimant est alors mis sous tension et désactive la gâche, ce qui libère en conséquence les moyens de dérivation.

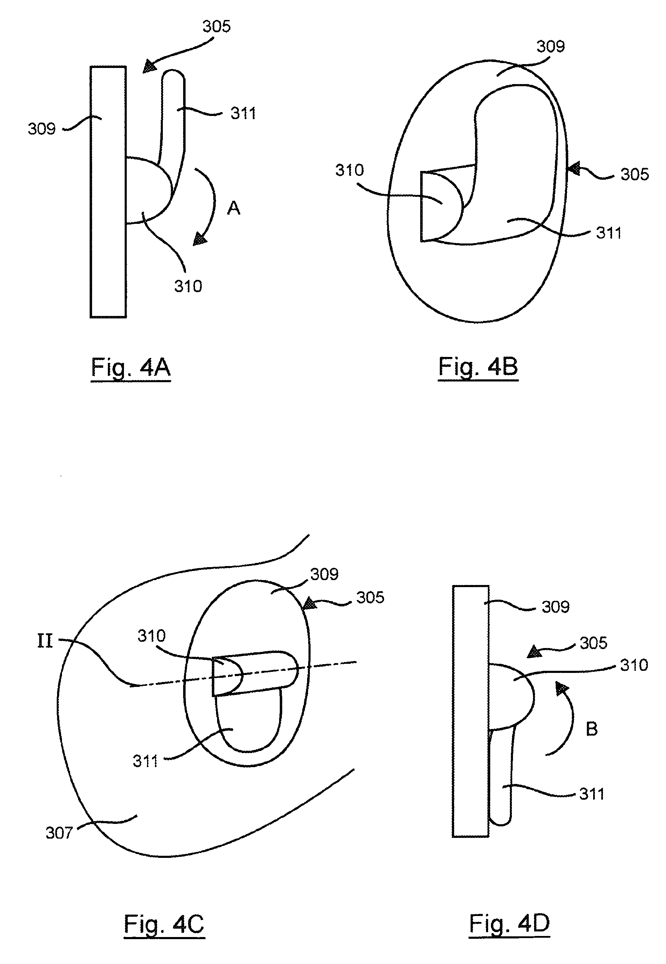

Les figures 4A à 4D montrent des moyens de dérivation de la sangle selon un deuxième mode de réalisation. Dans ce mode de réalisation, les moyens de dérivation 305 comprennent une base 309 qui est fixée à la partie latérale 307 de la coque 302. Un crochet 311 en forme de « L » est monté mobile entre deux pivots 310 montés sur la base 309, selon un axe II parallèle à la partie latérale 307 de la coque 302.

Le crochet 311 peut basculer d'une position de libération de la sangle (figures 4A et 4B) à une position de dérivation de la sangle (figures 4C et 4D) et inversement.

Dans la position de libération de la sangle, le crochet 311 n'est pas en contact avec la base 309 de manière à ménager un espace entre les deux éléments 309 et 311, comme illustré figure 4A, ce qui permet notamment d'éviter qu'un enfant ne se coince les doigts. Le crochet 311 passe de la position de libération de la sangle à la position de dérivation de la sangle en pivotant autour de l'axe II dans la direction A, par une action manuelle de l'utilisateur.

Le basculement inverse, dans la direction B, comme illustré figure 4D, est avantageusement automatique, comme pour le premier mode de réalisation, au bout d'un laps de temps prédéterminé et/ou lorsque le harnais est verrouillé.

Dans la position de dérivation de la sangle, la sangle peut être insérée (et ainsi retenue écartée) dans l'espace situé entre le crochet 311 et la base 309 (figure 4D). Le basculement selon la flèche B libère la sangle, qui reprend automatiquement sa position de travail.

Plusieurs variantes de mises en oeuvre peuvent être envisagées pour assurer la fonction des moyens dérivation de la sangle. Il peut par exemple s'agir d'au moins un anneau, passant ou étrier formé dans le dossier de la coque ou fixé (éventuellement de manière amovible) au dossier de la coque. Les moyens de dérivation peuvent être fixés à la coque par rivetage ou de manière amovible (par clippage).

## Revendications

1. Siège auto (102) pour enfant, comprenant des moyens de réception et de guidage (106) d'une sangle (101) de ceinture de sécurité d'un véhicule automobile, **caractérisé en ce qu'**il comprend des moyens de dérivation (105) de ladite sangle (101) de ceinture de sécurité, permettant d'écarter temporairement ladite sangle (101), pendant l'installation d'un enfant dans ledit siège auto (102), lesdits moyens de dérivation (105) étant portés par la coque du siège auto (102) et étant mobiles par rapport à ladite coque entre au moins deux positions :
- une position de dérivation, dans laquelle ladite sangle (101) est maintenue dans une position dérivée, facilitant l'installation de l'enfant ;
- une position de libération, dans laquelle ladite sangle (101) n'est pas maintenue par lesdits moyens de dérivation.

2. Siège auto (102) selon la revendication 1, **caractérisé en ce que**, lorsque ladite sangle (101) est libérée desdits moyens de dérivation (105), elle prend une position de maintien dudit siège auto (102), en coopérant avec lesdits moyens de réception et de guidage (106).

3. Siège auto (102) selon l'une quelconque des revendications 1 et 2, **caractérisé en ce que** lesdits moyens de dérivation (105) sont mobiles en rotation entre ladite position de dérivation et ladite position de libération.

4. Siège auto (102) selon la revendication 3, **caractérisé en ce que** ladite position de dérivation et ladite position de libération sont séparées par un angle de l'ordre de 180°.

5. Siège auto (102) selon l'une quelconque des revendications 1 à 4, **caractérisé en ce que** lesdits moyens de dérivation (105) coopèrent avec des moyens de commande d'un retour dans ladite position de libération.

6. Siège auto (102) selon la revendication 5, **caractérisé en ce que** lesdits moyens de commande comprennent des moyens de temporisation.

7. Siège auto (102) selon la revendication 6, **caractérisé en ce que** lesdits moyens de temporisation sont armés par le passage de ladite positon de libération à ladite position de dérivation.

8. Siège auto (102) selon la revendication 7, **caractérisé en ce que** lesdits moyens de temporisation comprennent un dispositif à ressort spiral ou un dispositif à roue à rochet et cliquet.

9. Siège auto (102) selon l'une quelconque des revendications 5 à 8, **caractérisé en ce que** lesdits moyens de commande comprennent des moyens de détection d'un verrouillage correct du harnais de l'enfant.

## Claims

1. Child's car seat (102), comprising means (106) for receiving and guiding a strap (101) of a safety belt of a motor vehicle, **characterised in that** it comprises means (105) for branching the safety belt strap (101), allowing the strap (101) to be temporarily moved away whilst a child is being positioned in the car seat (102), the branching means (105) being carried by the shell of the car seat (102) and being movable relative to the shell between at least two positions:
- a branching position in which the strap (101) is retained in a branched position, facilitating the positioning of the child;
- a release position, in which the strap (101) is not retained by the branching means.

2. Car seat (102) according to claim 1, **characterised in that**, when the strap (101) is released from the branching means (105), it takes up a position for retaining the car seat (102), co-operating with the receiving and guiding means (106).

3. Car seat (102) according to either claim 1 or claim 2, **characterised in that** the branching means (105) can be moved in rotation between the branching position and the release position.

4. Car seat (102) according to claim 3, **characterised in that** the branching position and the release position are separated by an angle in the order of 180°.

5. Car seat (102) according to any one of claims 1 to 4, **characterised in that** the branching means (105) co-operate with means for controlling a return into the release position.

6. Car seat (102) according to claim 5, **characterised in that** the control means comprise timing means.

7. Car seat (102) according to claim 6, **characterised in that** the timing means are armed by moving from the release position to the branching position.

8. Car seat (102) according to claim 7, **characterised in that** the timing means comprise a helical spring device or a device having a click and ratchet wheel.

9. Car seat (102) according to any one of claims 5 to 8, **characterised in that** the control means comprise means for detecting correct locking of the child harness.

## Patentansprüche

1. Autositz (102) für ein Kind, umfassend Mittel zur Aufnahme und Führung (106) eines Riemens (101) eines Sicherheitsgurts eines Kraftfahrzeugs, **dadurch gekennzeichnet, dass** er Mittel (105) zum Ablenken des Riemens (101) des Sicherheitsgurts umfasst, die es ermöglichen, den Riemen (101) vorübergehend während des Setzens eines Kindes in den Autositz (102) zur Seite zu schieben, wobei die Ablenkmittel (105) von der Schale des Autositzes (102) getragen werden und in Bezug zu der Schale zwischen mindestens zwei Positionen beweglich sind:
- einer Ablenkposition, in welcher der Riemen (101) in einer zur Seite geschobenen Position gehalten wird, die das Setzen des Kindes in den Sitz erleichtert;
- einer Freigabeposition, in der der Riemen (101) nicht von den Ablenkmitteln gehalten wird.

2. Autositz (102) nach Anspruch 1,
**dadurch gekennzeichnet, dass**, wenn der Riemen (101) von den Ablenkmitteln (105) freigegeben ist, dieser eine Position zum Halten des Autositzes (102) einnimmt, wobei er mit den Aufnahme- und Führungsmitteln (106) zusammenwirkt.

3. Autositz (102) nach einem der Ansprüche 1 und 2,
**dadurch gekennzeichnet, dass** die Ablenkmittel (105) zwischen der Ablenkposition und der Freigabeposition rotatorisch beweglich sind.

4. Autositz (102) nach Anspruch 3,
**dadurch gekennzeichnet, dass** die Ablenkposition und die Freigabeposition durch einen Winkel von ungefähr 180° getrennt sind.

5. Autositz (102) nach einem der Ansprüche 1 bis 4,
**dadurch gekennzeichnet, dass** die Ablenkmittel (105) mit Mitteln zur Steuerung einer Rückkehr in die Freigabeposition zusammenwirken.

6. Autositz (102) nach Anspruch 5,
**dadurch gekennzeichnet, dass** die Mittel zur Steuerung Verzögerungsmittel umfassen.

7. Autositz (102) nach Anspruch 6,
**dadurch gekennzeichnet, dass** die Verzögerungsmittel durch den Übergang von der Freigabeposition in die Ablenkposition aktiviert werden.

8. Autositz (102) nach Anspruch 7,
**dadurch gekennzeichnet, dass** die Verzögerungsmittel eine Spiralfedereinrichtung oder eine Schiebe- und Sperrklinkenradeinrichtung umfassen.

9. Autositz (102) nach einem der Ansprüche 5 bis 8,
**dadurch gekennzeichnet, dass** die Mittel zur Steuerung Mittel zur Erfassung einer korrekten Verriegelung des Geschirrs des Kindes umfassen.
